# EUROPEAN PATENT SPECIFICATION

(11) **EP 2 731 852 B1**
(45) Date of publication and mention of the grant of the patent: **13.04.2016**
(21) Application number: 11776529.7
(22) Date of filing: 12.07.2011
(51) Int. Cl.: B62D 5/065, B60K 6/485

(54) **METHOD FOR CONTROLLING THE ELECTRIC MOTOR OF A POWER STEERING SYSTEM**
VERFAHREN ZUR STEUERUNG DES ELEKTROMOTORS EINES SERVOLENKUNGSSYSTEMS
PROCÉDÉ DE COMMANDE DU MOTEUR ÉLECTRIQUE D'UN SYSTÈME DE DIRECTION ASSISTÉE

(43) Date of publication of application: 21.05.2014
(73) Proprietor: Volvo Lastvagnar AB, 405 08 Göteborg (SE)
(72) Inventor: DORAY, Jean-Baptiste, F-38670 Chasse sur Rhone (FR); THOMAS, Thibault, F-69800 Saint Priest (FR)
(74) Representative: Faucheux, Jérôme
(86) International application number: PCT/IB2011/002333
(87) International publication number: WO 2013/008052

(56) References cited:
- EP-A1- 2 163 457
- WO-A1-2010/116091
- FR-A1- 2 918 341
- US-A1- 2002 056 440
- US-A1- 2003 234 135
- US-A1- 2009 292 420

## Description

### Field of the invention

The present invention relates to a method for controlling the electric motor of a electro-hydraulic power steering system in a vehicle, especially an industrial vehicle such as a heavy truck.

### Technological background

A hydraulic power steering system has been a standard feature in vehicles for many years, in particular in industrial vehicles. Such a system assists the vehicle driver by applying a force to the wheels, through a hydraulic steering actuator, which complements the effort of the driver which is mechanically transmitted from the steering wheel to the steered wheels of the vehicle. Therefore, a lower effort is required from the driver when turning the steering wheel and the vehicle is easier to manoeuvre.

A hydraulic power steering system typically comprises a hydraulic circuit carrying a pressurized fluid - such as oil - from a tank to the steering actuator, by means of a pump.

The invention relates more particularly to hydraulic power steering systems in which the pump is driven by an electric motor, i.e. electro-hydraulic systems. With such a system, the electric motor can be stopped if no steering assistance is required, thereby reducing the fuel consumption. The motor can be started again on demand if a steering assistance is later required. This helps saving fuel which otherwise would be needlessly used.

However, if the electric motor is stopped abruptly while a torque is being applied by the driver on the steering wheel, even though the wheels may remain in a constant position, the torque assistance provided to the driver will stop abruptly which may, due to a resistive torque experienced by the wheels, cause a sudden movement of the steering wheel in the direction opposite to the direction according to which the driver exerts his action on the steering wheel.

A typical situation where this can happen is when, the vehicle being at standstill, the wheels of the vehicle are blocked against a sidewalk border but the driver maintains a certain torque on the steering wheel. Another occurrence can be when the driver exerts on the steering wheel a torque which is lower than the torque needed to exceed the resisting torque exerted by the ground (for example highly abrasive tarmac) on the wheels, thereby causing no significant movement of the wheels.

The steering wheel backlash, if all steering assistance is suddenly suppressed, can then be quite important, which is at least unpleasant for the driver and which could even injure the vehicle driver.

It therefore appears that, from several standpoints, there is room for improvement in power steering systems.

Document EP2163457 A1 is considered as being the closest prior art according to the preamble of claim 1.

### Summary

It is an object of the present invention to provide an improved power steering system which can overcome the above drawback.

More specifically, an object of the present invention is to provide a method for controlling the electric motor of a power steering system in a vehicle, which makes it possible to save fuel while not entailing discomfort for the driver nor any substantial increase in the overall cost of the system.

The invention relates to a method for controlling the electric motor of a power steering system in a vehicle, said power steering system including a hydraulic pump driven by said electric motor, where the system does not comprise a steering torque sensor but a steering angle sensor, said method including deciding upon predetermined operating conditions to stop the motor according to a stopping process, characterized in that said stopping process of the method comprises:
- reducing the rotation speed of the motor abruptly to an intermediate value different from zero during a drop phase;
- monitoring the steering angle sensor to detect a movement of the steering system of the vehicle caused by the reduction of the rotation speed of the motor;
- in case a movement of the steering system is detected, interrupting the stopping process.

Thus, when the operating conditions to stop the pump (i.e. the electric motor) are fulfilled, the electric motor is not stopped immediately without any monitoring of the system. According to the invention, the motor rotation speed is decreased by steps while appropriate monitoring is carried out to ensure that the steering system does not have unacceptable movements.

In concrete terms, reducing the rotation speed of the motor results in decreasing the steering assistance force and, as a consequence:
- if no steering wheel torque exists when the stopping process begins, then the steering wheel does not turn. Since no movement of the steering system is detected, the stopping process is continued by further reducing the rotation speed of the motor until it reaches a minimal value, for example zero;
- if a steering wheel torque exists, then the steering wheel moves, which is detected by the steering angle sensor. For example, said movement can be detected if it exceeds a certain threshold. Before said movement is too important, the stopping process is interrupted, i.e. the rotation speed of the motor is not further reduced.

The invention takes advantage of a steering angle sensor which can be a component commonly provided on the steering system of the vehicle, or which can be implemented easily and at low cost, contrary to steering torque sensors which are usually expensive.

According to other possible features:
- during the drop phase, the rotation speed of the motor is reduced at a mean rate which is higher or equal to 100 percent of the initial rotation speed of the motor per second, preferably higher or equal to 250 percent of the initial rotation speed of the motor per second.
- during the drop phase, the rotation speed of the motor is reduced to an intermediate value comprised between 15 to 75 percent of the initial rotation speed of the motor, preferably comprised between 20 to 50 percent of the initial rotation speed of the motor.
- the steering angle sensor is monitored during the drop phase and/or during a rest phase beginning immediately after the drop phase.
- the movement of the steering system is deemed to be caused by the reduction of the rotation speed of the motor if it is detected within less than 1 second, preferably less than 0.5 seconds, after the end of the drop phase.
- the rotation speed of the motor is substantially kept at said intermediate value during a rest phase beginning immediately after the drop phase.
- if no movement of the steering system is detected, the reduction of the rotation speed of the motor comprises at least a second drop phase, at the end of the rest phase, whereby the rotation speed of the motor is reduced to a second intermediate value different from zero
- in case a movement of the steering system is detected, the stopping process is interrupted and the rotation speed of the motor is raised to its initial value.
- in case no movement of the steering system is detected, the stopping process is continued until the rotation speed of the motor is brought to a minimal value.
- the predetermined operating conditions to be fulfilled for stopping the motor include the fact that the vehicle speed is zero.

These and other features and advantages will become apparent upon reading the following description in view of the drawing attached hereto representing, as non-limiting examples, embodiments of the invention.

### Brief description of the drawings

The following detailed description of several embodiments of the invention is better understood when read in conjunction with the appended drawings being understood, however, that the invention is not limited to the specific embodiments disclosed.
Figure 1 is a schematic and partial drawing of a vehicle showing a power steering system in which can be implemented the method according to the invention,
Figure 2 is a diagram illustrating the flow rate of the pump of the power steering system as a function of time in case the stopping process is not interrupted, according to a first embodiment of the invention;
Figure 3 is a diagram illustrating the pressure delivered by the pump as a function of the steering wheel torque when the flow rate of the pump is decreased;
Figure 4 is a diagram illustrating the flow rate of the pump of the power steering system as a function of time in case the stopping process is not interrupted, according to a second embodiment of the invention;
Figure 5 is a diagram illustrating the flow rate of the pump of the power steering system as a function of time in case the stopping process is interrupted.

### Detailed description

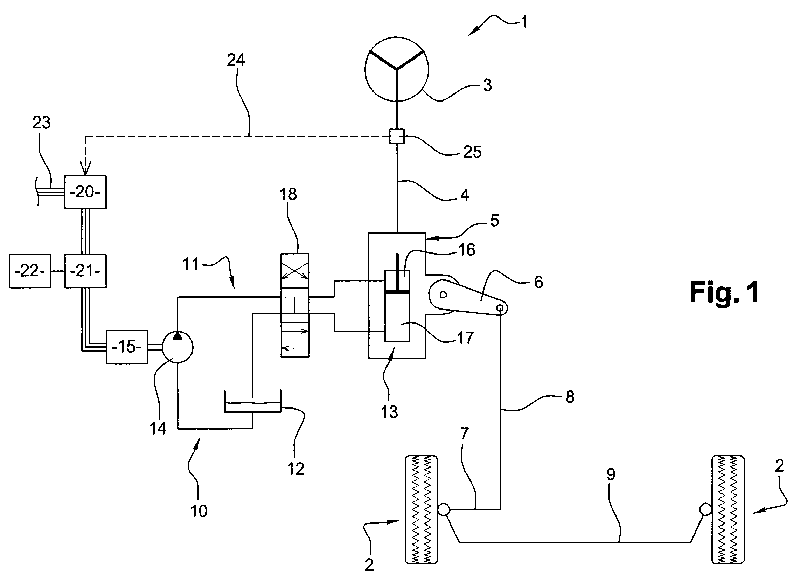

As this is schematically and partially illustrated in Figure 1, a vehicle 1, such as a truck, comprises a traction engine which is able to drive the drive wheels 2 of the vehicle through a driveline.

The steering of the wheels is controlled by a device comprising a mechanical transmission of the movement from a steering wheel 3 of the vehicle 1 - or any other type of driver interface member - to at least one of the wheels 2. In the illustrated embodiment, the steering wheel 3 is mechanically connected to a steering column 4 to drive a steering gear 5 which is connected to the wheels 2 by a mechanical arrangement. This mechanical arrangement may include a drop arm 6 which transmits the steering movement from the steering gear 5 to an upper steering arm 7 via a drag link 8. From the upper steering arm 7, the movement continues to the steering knuckle which makes the wheel 2 turn. To make sure that the other wheel 2 turns too, the steering wheel movement is transmitted from the steering knuckle with the aid of a track rod 9 to the steering knuckle of the other wheel 2. The steering gear 5 can for example be of the ball and nut type, as in the shown example, to change the rotating movement of the steering column in another rotating movement, for example around a perpendicular axis. The steering gear could alternatively be of the rack and pinion type to transform the rotating movement of the steering column into a linear movement.

The vehicle further comprises a power steering system 10 in order to assist the driver in steering the vehicle 1.

As this is illustrated in the figures, the power steering system 10 comprises a hydraulic circuit 11 which carries a power steering fluid, typically oil. The hydraulic circuit 11 forms a closed loop in which the fluid can flow from a fluid tank 12 to a hydraulic steering actuator 13 and then back to the fluid tank 12. The fluid is moved in the loop by means of a pump 14 which is arranged between the fluid tank 12 and the actuator 13 and which is driven by an electric motor 15. In the disclosed embodiment, the pump 14 is a fixed capacity pump so that the fluid flow rate delivered by the pump is substantially linearly proportional to the rotation speed of the electric motor.

In a conventional embodiment, the actuator 13 is integrated with the steering gear 5 and is a two way actuator which receives pressurized fluid in one of its two chambers 16, 17 depending on the torque exerted by the driver on the steering wheel 3, in order to provide a steering assistance.

The hydraulic circuit 11 may further include a directional control valve 18. Said directional control valve 18 is capable of directing the fluid towards the appropriate chamber of the steering actuator 13 and to by-pass said actuator 13 when no steering assistance is needed. Typically, said control valve 18 can be operated based on slight deformations which are induced by the steering and resisting efforts on a torque rod which is part of the mechanical transmission system in the steering gear 5.

The power steering system 10 can also comprise a controller 20 for controlling the electric motor 15 via a converter 21 also connected to an energy storage system 22. The controller 20, which can typically be an electronic controller, can be connected by appropriate means 23 to a vehicle databus. The controller 20 is further designed to receive a position information 24 which can be set from a control member of the steering, on which the driver can act, preferably a steering angle of the steering wheel 3 detected on the steering column 4. For example, said steering angle can be detected by an appropriate steering angle sensor 25 provided on the steering column 4.

As illustrated in Figure 1, the power steering system 10 does not comprise a steering torque sensor. Indeed, no additional sensor is required for implementing the method according to the invention.

In order to save fuel, the invention provides a method for controlling the electric motor 15 which consists in stopping the motor when no steering assistance is required, while avoiding a high force feedback in the steering wheel 3.

The method firstly comprises the step of deciding upon predetermined operating conditions to stop the motor 15.

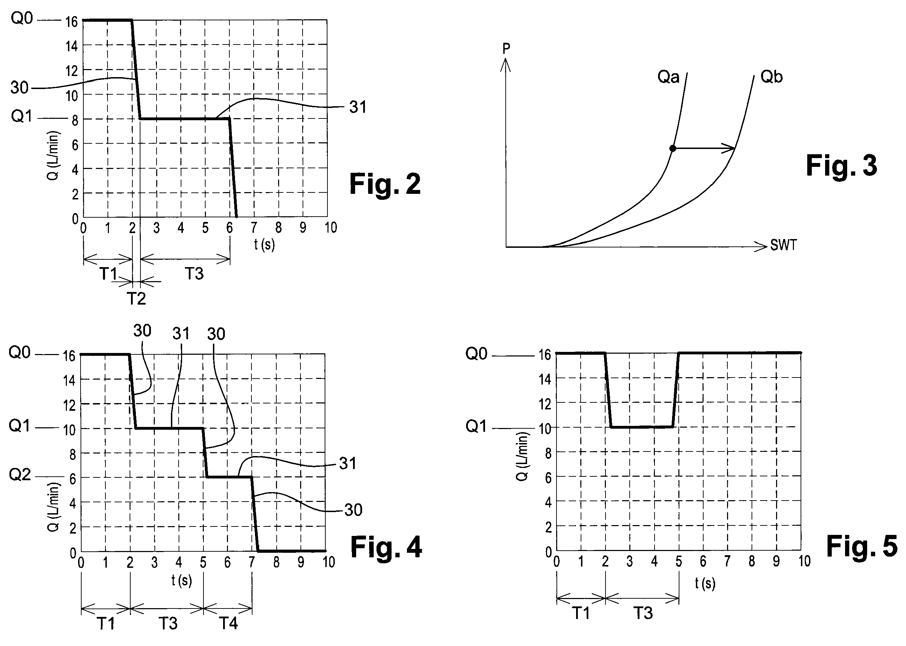

Said predetermined operating conditions to be fulfilled for stopping the motor 15 can include the fact that the vehicle speed is zero. This can typically happen when the vehicle 1 has stopped at a traffic light, or at a place where items have to be delivered. Preferably, the stopping process is not begun immediately when the vehicle speed has reached zero, but after a certain period of time T1. As represented in Figure 2, said period of time T1 can last several seconds, for example from 1 to 15 seconds.

The predetermined operating conditions could include other parameters. For example, the fact that the steering wheel is not being turned might be taken into consideration.

If the predetermined operating conditions are fulfilled, the stopping process begins by reducing the rotation speed of the motor 15. In concrete terms, the controller 20 controls the speed of the electric motor 15, thus the flow Q of fluid in the hydraulic circuit 11.

The method also comprises monitoring the steering angle sensor 25 to detect a movement of the steering system - in particular of the steering column 4 or steering wheel 3 - of the vehicle 1.

As represented in Figure 3, reducing the fluid flow in the hydraulic circuit 11 from Qa to Qb, as a consequence of the reduction of the motor rotation speed, results in a modification of the curve which links the pressure P delivered by the pump 14 to the steering wheel torque SWT which the driver needs to deliver on the steering wheel, and entails an increase in the steering wheel torque SWT.

Therefore, if a steering wheel torque exists when the stopping process begins, the decrease in the motor rotation speed results in an opposite steering wheel torque which makes the steering wheel 3 turn. The system is designed so that such a movement of the steering wheel 3 is detected by the steering angle sensor 25 provided it exceeds a certain threshold. Said threshold is set low enough so that there is no risk of injuring the driver because of the steering wheel movement.

In case a movement of the steering wheel 3 is detected, the stopping process is interrupted in order to avoid more discomfort for the driver.

On the contrary, if no steering wheel torque exists when the stopping process begins, then the steering wheel 3 does not turn. No movement being detected by the steering angle sensor 25, the stopping process is continued by further reducing the rotation speed of the motor until it reaches a minimal value, for example zero.

In practice, preferably, the rotation speed of the motor is reduced abruptly to an intermediate value different from zero during a drop phase. For example, during the drop phase, the rotation speed of the motor is reduced at a mean rate which is higher or equal to 100 percent of the initial rotation speed of the motor, per second, but preferably higher or equal to 250 percent of the initial rotation speed of the motor, per second. Of course the real speed variation during the drop phase is not necessarily linear with time. The aim is to cause a sudden decrease of the torque assistance, thereby causing a sudden increase of the torque to be provided by the driver. Preferably, the intermediate value is comprised between 15 to 75 percent of the initial rotation speed of the motor, preferably comprised between 20 to 50 percent if the initial rotation speed of the motor. The aim of choosing such an intermediate value is to cause a torque variation in the system of a magnitude which is sufficient that it cannot be compensated by a driver who would be holding the steering wheel, thereby causing a movement of the steering wheel of sufficient magnitude to be reliably detected, while making sure that the backlash created by the movement is not too intrusive for the driver and cannot be a cause of injury. Typically, the drop phase would last between 50 and 500 milliseconds, preferably between 50 and 250 milliseconds.

Immediately following the drop phase, a rest phase is provided where the rotation speed of the motor does not vary abruptly, by contrast with the drop phase. As shown on the Figures, the rotation speed of the motor can be substantially kept at said intermediate value during the rest. In such a case, as illustrated in figure 2, the fluid flow Q is reduced abruptly to an intermediate value Q1 different from zero during a drop phase 30, and then substantially kept at said intermediate value Q1 during a rest phase 31. Thus, the stopping process comprises at least one step including a drop phase 30 followed by a rest phase 31. During the rest phase, the rotation speed of the motor could vary, either by decreasing or by increasing, but preferably at a rate inferior to 50 percent of the corresponding intermediate speed of the motor at the beginning of the rest phase, and preferably at a rate inferior to 20 percent, per second, of the corresponding intermediate speed of the motor at the beginning of the rest phase.

In case a steering wheel torque exists when the stopping process begins, having an abrupt drop phase 30, i.e. in particular a phase which is short in time, makes it possible to cause a sudden movement of the steering wheel 3 which cannot be immediately corrected by the driver, as compared to a slow and progressive decrease in the steering assistance which the driver could compensate without creating any significant movement of the steering wheel. With an intermediate value Q1 which is not too close from the fluid flow Q0 before the motor 15 is stopped, the amplitude of the rotation movement of the steering wheel 3, caused by the reduction of the rotation speed of the motor, can be high enough to be clearly detected by the steering angle sensor 25.

To detect any movement caused by the reduction of the rotation speed of the motor, the steering angle sensor is monitored especially during the drop phase and/or during the rest phase beginning immediately after the drop phase. Basically, the movement of the steering system can be deemed to be caused by the reduction of the rotation speed of the motor if it is detected within less than 1 second, preferably less than 0.5 seconds, after the end of the drop phase.

Besides, the intermediate value Q1 is different from zero to avoid a too high decrease which would result in a too important movement of the steering wheel 3 causing an unacceptable feeling.

Figure 2 shows the evolution of the flow rate Q in the hydraulic circuit 11 as a function of time in case the stopping process is not interrupted. In this first embodiment, the stopping process comprises a single step.

By way of an example, the duration T2 of the drop phase 30 can be approximately 200 milliseconds. Besides, with Q0 = 16 l/min, Q1 can be for example around 8 l/min. Q0 corresponds to the initial rotation speed of the motor 15, i.e. the rotation speed of the motor just before the stopping process begins. Said initial rotation speed is not necessarily the maximum speed of the motor, since said speed can vary depending on the required steering assistance level.

In this first embodiment, the duration T3 of the rest phase 31 can be for example around 4 s.

Figure 4 is similar to figure 2, in case of a second embodiment where the stopping process includes two successive steps, i.e. the decrease of the flow rate Q comprises two intermediate values Q1, Q2 between Q0 and zero, during rest phases 31, and three drop phases 30.

Generally speaking, if no movement of the steering system is detected, the reduction of the rotation speed of the motor 15 can comprise at least two successive substantially rest phases each at an intermediate value between the initial rotation speed and zero, thereby forming at least two steps. The method therefore makes it possible to avoid too important movements of the steering wheel in case a steering wheel torque exists when the stopping process begins, since the flow decrease is not too high.

Alternatively, if no movement of the steering system is detected by the steering angle sensor 25 during the first step, it could be envisaged to decrease progressively the motor rotation speed down to zero instead of causing a subsequent abrupt decrease.

In this second embodiment, the duration T3 of the first rest phase 31 can be around 3 s, the intermediate value Q1 of the flow then being around 10 l/min (with Q0 = 16 l/min). The duration T4 of the second rest phase 31 can be around 2 s, the intermediate value Q2 of the flow then being around 6 l/min.

More generally, the intermediate value(s) can be in the range of 15% - 75% of the initial rotation speed. In other words, Q1 and Q2 can be in the range of 15% - 75% of Q0. This results in a decrease which could cause a movement of the steering system that is high enough to be easily detected but low enough to remain acceptable for the driver's comfort.

As regards the duration of one rest phase 31, it can be between around 1 and 5 s.

Hence, the stopping process generally lasts less than 10 seconds, if no movement of the steering system is detected.

Figure 5 shows the evolution of the flow rate of the pump as a function of time in case the stopping process is interrupted.

In case a movement of the steering system is detected, the rotation speed of the motor 15 can be raised, for example up to its initial value, the flow Q then increasing from the intermediate value Q1 to Q0. The increase is shown to be abrupt, but is could be more prodressive.

Such an interruption of the stopping process can avoid an unwanted stop of the power steering system.

In practice, the drop of the fluid flow Q causes a sudden but low rotation of the steering system, which is acceptable for the driver. Since the flow Q is then increased up to Q0, if the predetermined operating conditions to stop the motor 15 are still fulfilled, the stopping process will start again periodically. As a consequence, the driver will periodically feel small rotations of the steering wheel 3 unless he/she releases the steering wheel 3, thereby allowing the motor 15 to be stopped and minimizing the fuel consumption.

Of course, the invention is not restricted to the embodiments described above by way of non-limiting examples, but on the contrary it encompasses all embodiments thereof.

## Claims

1. A method for controlling the electric motor (15) of a power steering system (10) in a vehicle (1), said power steering system (10) including a hydraulic pump (14) driven by said electric motor (15), where the system does not comprise a steering torque sensor but a steering angle sensor (25), said method including deciding upon predetermined operating conditions to stop the motor (15) according to a stopping process, **characterized in that** said stopping process of the method comprises:
- reducing the rotation speed of the motor (15) abruptly to an intermediate value different from zero during a drop phase (30);
- monitoring the steering angle sensor (25) to detect a movement of the steering system of the vehicle (1) caused by the reduction of the rotation speed of the motor;
- in case a movement of the steering system is detected, interrupting the stopping process.

2. The method according to claim 1, **characterized in that**, during the drop phase, the rotation speed of the motor is reduced at a mean rate which is higher or equal to 100 percent of the initial rotation speed of the motor, per second, preferably higher or equal to 250 percent of the initial rotation speed of the motor, per second.

3. The method according to any of claims 1 or 2, **characterized in that**, during the drop phase, the rotation speed of the motor is reduced to an intermediate value comprised between 15 to 75 percent of the initial rotation speed of the motor, preferably comprised between 20 to 50 percent of the initial rotation speed of the motor.

4. The method according to any preceding claim, **characterized in that** the steering angle sensor is monitored during the drop phase and/or during a rest phase beginning immediately after the drop phase.

5. The method according to any preceding claim, **characterized in that** the movement of the steering system is deemed to be caused by the reduction of the rotation speed of the motor if it is detected within less than 1 second, preferably less than 0.5 seconds, after the end of the drop phase (30).

6. The method according to any preceding claim, **characterized in that** the rotation speed of the motor is substantially kept at said intermediate value during a rest phase (31) beginning immediately after the drop phase.

7. The method according to any preceding claim in combination with claim 4 or 6, **characterized in that**, if no movement of the steering system is detected, the reduction of the rotation speed of the motor (15) comprises at least a second drop phase (30), at the end of the rest phase, whereby the rotation speed of the motor is reduced to a second intermediate value different from zero

8. The method according to any preceding claim, **characterized in that**, in case a movement of the steering system is detected, the stopping process is interrupted and the rotation speed of the motor (15) is raised to its initial value.

9. The method according to any preceding claim, **characterized in that**, in case no movement of the steering system is detected, the stopping process is continued until the rotation speed of the motor (15) is brought to a minimal value.

10. The method according to any preceding claim, **characterized in that** the predetermined operating conditions to be fulfilled for stopping the motor (15) include the fact that the vehicle speed is zero.

## Patentansprüche

1. Verfahren zur Steuerung des Elektromotors (15) eines Servolenkungssystems (10) in einem Fahrzeug (1), wobei das Servolenkungssystem (10) eine von dem Elektromotor (15) angetriebene Hydraulikpumpe (14) einschließt, wobei das System keinen Lenkdrehmomentsensor sondern einen Lenkwinkelsensor (25) aufweist, wobei das Verfahren ein Entscheiden auf der Basis von vorbestimmten Betriebsbedingungen über das Anhalten des Motors (15) gemäß einem Anhaltevorgang einschließt, **dadurch gekennzeichnet, dass** der Anhaltevorgang des Verfahrens umfasst:
- Reduzieren der Drehzahl des Motors (15) abrupt auf einen Zwischenwert, der verschieden von Null ist, während einer Rückgangsphase (30);
- Überwachen des Lenkwinkelsensors (25) zur Erfassung einer Bewegung des Lenksystems des Fahrzeugs (1), das durch die Verringerung der Motordrehzahl verursacht wurde,
- falls eine Bewegung des Lenksystems erfasst wird, Unterbrechen des Anhaltevorgangs.

2. Verfahren nach Anspruch 1, **dadurch gekennzeichnet, dass** während der Rückgangsphase die Motordrehzahl um eine mittlere Rate reduziert wird, die höher oder gleich 100 Prozent der Ausgangsdrehzahl des Motors pro Sekunde, vorzugsweise höher oder gleich 250 Prozent der Ausgangsdrehzahl des Motors pro Sekunde ist.

3. Verfahren nach irgendeinem der Ansprüche 1 oder 2, **dadurch gekennzeichnet, dass** während der Rückgangsphase die Drehzahl des Motors auf einen Zwischenwert reduziert wird, der zwischen 15 bis 75 Prozent der Ausgangsdrehzahl des Motors, vorzugsweise zwischen 20 bis 50 Prozent der Ausgangsdrehzahl des Motors beträgt.

4. Verfahren nach irgendeinem vorhergehenden Anspruch, **dadurch gekennzeichnet, dass** der Lenkwinkelsensor während der Rückgangsphase und/oder während einer unmittelbar nach der Rückgangsphase beginnenden Ruhephase überwacht wird.

5. Verfahren nach irgendeinem vorhergehenden Anspruch, **dadurch gekennzeichnet, dass** die Bewegung des Lenksystems als durch die Reduzierung der Motordrehzahl verursacht angesehen wird, wenn sie innerhalb von weniger als 1 Sekunde, vorzugweise weniger als 0,5 Sekunden, nach Ende der Rückgangsphase (30) erfasst wird.

6. Verfahren nach irgendeinem vorhergehenden Anspruch, **dadurch gekennzeichnet, dass** die Motordrehzahl während einer unmittelbar nach der Rückgangsphase beginnenden Ruhephase (31) im Wesentlichen auf dem Zwischenwert gehalten wird.

7. Verfahren nach irgendeinem vorhergehenden Anspruch in Kombination mit Anspruch 4 oder 6, **dadurch gekennzeichnet, dass**, wenn keine Bewegung des Lenksystems erfasst wird, die Reduzierung der Drehzahl des Motors (15) wenigstens eine zweite Rückgangsphase (30) am Ende der Ruhephase umfasst, wobei die Motordrehzahl auf einen zweiten, von Null verschiedenen Zwischenwert reduziert wird.

8. Verfahren nach irgendeinem vorhergehenden Anspruch, **dadurch gekennzeichnet, dass**, wenn eine Bewegung des Lenksystems erfasst wird, der Anhaltevorgang unterbrochen wird und die Drehzahl des Motors (15) auf ihren Ausgangswert angehoben wird.

9. Verfahren nach irgendeinem vorhergehenden Anspruch, **dadurch gekennzeichnet, dass**, wenn keine Bewegung des Lenksystems erfasst wird, der Anhaltevorgang fortgesetzt wird, bis die Drehzahl des Motors (15) auf einen Minimalwert gebracht ist.

10. Verfahren nach irgendeinem vorhergehenden Anspruch, **dadurch gekennzeichnet, dass** die vorbestimmten Betriebsbedingungen, die für ein Anhalten des Motors (15) erfüllt sein müssen, die Tatsache einschließen, dass die Fahrzeuggeschwindigkeit Null ist.

## Revendications

1. Procédé de commande du moteur électrique (15) d'un système de direction assistée (10) dans un véhicule (1), ledit système de direction assistée (10) comprenant une pompe hydraulique (14) entraînée par ledit moteur électrique (15), dans lequel le système ne comporte pas de capteur de couple de direction, mais un capteur (25) d'angle de braquage, ledit procédé comprenant l'opération consistant à décider de conditions de fonctionnement prédéterminées pour arrêter le moteur (15) selon un processus d'arrêt, **caractérisé en ce que** ledit processus d'arrêt selon le procédé comprend les étapes consistant à :
réduire brusquement la vitesse de rotation du moteur (15) à une valeur intermédiaire non nulle pendant une phase de chute (30) ;
surveiller le capteur (25) d'angle de braquage pour détecter un mouvement du système de direction du véhicule (1) provoqué par la réduction de la vitesse de rotation du moteur ;
au cas où un mouvement du système de direction est détecté, interrompre le processus d'arrêt.

2. Procédé selon la revendication 1, **caractérisé en ce que**, pendant la phase de chute, on réduit la vitesse de rotation du moteur à un rythme moyen, par seconde, qui est supérieur ou égal à 100 pour cent de la vitesse de rotation initiale du moteur, de préférence supérieur ou égal à 250 pour cent de la vitesse de rotation initiale du moteur.

3. Procédé selon la revendication 1 ou 2, **caractérisé en ce que**, pendant la phase de chute, on réduit la vitesse de rotation du moteur à une valeur intermédiaire comprise entre 15 et 75 pour cent de la vitesse de rotation initiale du moteur, de préférence comprise entre 20 et 50 pour cent de la vitesse de rotation initiale du moteur.

4. Procédé selon l'une quelconque des revendications précédentes, **caractérisé en ce qu'**on surveille le capteur d'angle de braquage pendant la phase de chute et/ou pendant une phase de repos commençant immédiatement après la phase de chute.

5. Procédé selon l'une quelconque des revendications précédentes, **caractérisé en ce que** le mouvement du système de direction est considéré comme étant provoqué par la réduction de la vitesse de rotation du moteur si elle est détectée en moins de 1 seconde, de préférence en moins de 0,5 seconde, après la fin de la phase de chute (30).

6. Procédé selon l'une quelconque des revendications précédentes, **caractérisé en ce qu'**on maintient la vitesse de rotation du moteur sensiblement à ladite valeur intermédiaire pendant une phase de repos (31) commençant immédiatement après la phase de chute.

7. Procédé selon l'une quelconque des revendications précédentes en combinaison avec la revendication 4 ou 6, **caractérisé en ce que**, si aucun mouvement du système de direction n'est détecté, la réduction de la vitesse de rotation du moteur (15) comprend au moins une seconde phase de chute (30), à la fin de la phase de repos, moyennant quoi la vitesse de rotation du moteur est réduite à une seconde valeur intermédiaire non nulle.

8. Procédé selon l'une quelconque des revendications précédentes, **caractérisé en ce que**, au cas où un mouvement du système de direction est détecté, on interrompt le processus d'arrêt et la vitesse de rotation du moteur (15) est relevée à sa valeur initiale.

9. Procédé selon l'une quelconque des revendications précédentes, **caractérisé en ce que**, au cas où aucun mouvement du système de direction n'est détecté, on poursuit le processus d'arrêt jusqu'à ce que la vitesse de rotation du moteur (15) soit amenée à une valeur minimale.

10. Procédé selon l'une quelconque des revendications précédentes, **caractérisé en ce que** les conditions de fonctionnement prédéterminées à remplir pour arrêter le moteur (15) comprennent le fait que la vitesse du véhicule est nulle.
